# EUROPEAN PATENT SPECIFICATION

(11) **EP 3 378 326 B1**
(45) Date of publication and mention of the grant of the patent: **12.08.2020**
(21) Application number: 16865330.1
(22) Date of filing: 16.11.2016
(51) Int. Cl.: A23K 10/37, A23K 50/10, A23K 50/20

(54) **EXTRUDED FEED FORMULA BASED ON CHAFF OF CROPS OR FIELD RESIDUES FOR RUMINANTS AND HORSES**
EXTRUDIERTE FUTTERFORMEL AUF DER BASIS VON SPREU VON KULTURPFLANZEN ODER FELDRÜCKSTÄNDEN FÜR WIEDERKÄUER UND PFERDE
FORMULATION NUTRITIVE EXTRUDÉE À BASE DE MENUE PAILLE DE CULTURES OU DE RESTES DE CULTURES POUR RUMINANTS ET ÉQUIDÉS

(30) Priority: 18.11.2015 BR 102015288824; 14.11.2016 BR 102016266059
(43) Date of publication of application: 26.09.2018
(73) Proprietor: Samaia Neto, Alberto, 04530-050 Sao Paulo - SP (BR)
(72) Inventor: PEREIRA DO NASCIMENTO, Rodrigo Anselmo, CEP 38701-182 Patos de Minas - MG (BR); SAMAIA NETO, Alberto, Itaim Bibi 04530-050 Sao Paulo - SP (BR)
(74) Representative: Gallego Jiménez, José Fernando
(86) International application number: PCT/BR2016/050298
(87) International publication number: WO 2017/083949

(56) References cited:
- BR-A- PI0 601 922
- BR-A2-102013 023 362
- CN-A- 1 457 669
- CN-A- 104 664 058
- FR-A1- 2 406 395
- GB-A- 2 406 516
- US-A- 4 258 031
- US-A- 4 333 923
- US-A1- 2014 147 533
- US-A1- 2015 282 505
- US-B1- 6 261 609
- MOURAO, R. DE C et al.: "Aditivos alimentares para vacas leiteiras", Revista eletronica nutritime, vol. 05, September 2012 (2012-09), pages 2011-2040, XP055501035,
- VIEIRA, L. L. R.: "Extrato de plantas como aditivo na nutrição de ruminantes", Trabalho de conclusão de curso (Graduação em Zootecnia) - Escola de Veterinaria e Zootecnia, 2014, page 46, XP055383142, Goiás
- QUADROS, J. B. DA S. et al.: "Digestibilidade Aparente e Desenvolvimento de Equinos em Crescimento Submetidos a Dietas Compostas por Diferentes Niveis de Substituição do Feno de Tifton 85 pela Casca de Soja", Revista Brasileira de Zootecnia, vol. 33, no. 3, 2004, pages 564-574, XP055383139,
- QUEIROZ, A. C et al.: "Suplementação da Palhada de Milho na Alimentação de Bovinos. 1. Consumo, Taxa de Passagem da Materia Seca, Degradação In situ da Materia Seca e da Fibra em Detergente Neutro", Revista Brasileira de Zootecnia, vol. 27, no. 2, 1998, pages 381-389, XP055542422,
- DOMINGUES, J. L.: "Uso de volumosos conservados na alimentação de equinos", Revista Brasileira de Zootecnia, vol. 38, 2009, pages 259-269, XP055383145,
- SILVA, A. L. DA et al.: "Suplementação para equinos - revisão", Revista eletrônica nutritime, vol. 11, no. 06, November 2014 (2014-11), pages 3810-3819, XP055383146,

## Description

### Field of the invention

The present patent application refers to a nutritional formulation in the form of animal feed, concentrate and supplement, with extruded characteristics, based on crop haystacks or culture residues, used for feeding ruminants and/or equine animals.

### Background

The extrusion process as used for obtaining food for ruminant animals is known from the state of the art, as we can prove from the North American patent documents US 5,540,932, dated April 13, 1995, and US 5,683,739, dated July 11, 1996.

Extruded feed is a food which is processed under high temperature, pressure, dragging force and for a short period of time, followed by an abrupt change in pressure, making it become much more useful for animals.

Extrusion is very effective to improve the nutritional value of food of vegetal origin, since nutrients in them are found within cells involved by a layer of a low digestibility material (cellulose, hemicellulose, lignin), making the access of the digestive enzymes to them become difficult.

In Brazil, the patent application BR 0904841-3 presents the formulation of an extruded product, intended for the nutrition of ruminants, based on subproducts or co-products originated from agricultural industries. US 4,333,923 relates to a method for improving the efficiency of ruminant feed utilization. Phthalides enhance propionate production and inhibit methane production in the rumen and are thus useful for improving feed utilization efficiency in ruminant animals.

Other than in the patent field, similar products currently found in the market either are not extruded, or do not include fiber products, culture residues or haystacks, or are also too expensive and economically unfeasible to cattle breeders.

The development of the patent application as presented herein has taken into consideration products as known in the current state of the art, with the object to develop a product with a more accessible cost to the market, better prepared from the nutritional point of view and applied to other animal species, besides ruminants.

Therefore, formulations have been studied with other kinds of food originating from different cultures from those as disclosed and taught by the patent applications as mentioned by the description of the state of the art, as well as currently known products in the market of feed for ruminants and equines.

As a result of research and development, the formulation as claimed has been obtained, which combination of formulated foods presents better energy and nutritional efficacy, with significant reduction in the cost of the final product, due to the abundant raw material as used being originated from haystacks of annual and/or perennial crops, especially from sugar cane and grass, but not excluding haystacks of corn, soy, sorghum, millet, wheat, triticale, bulgur, ryegrass, oats, sugar cane bagasse and many others, as well as their crop residues.

Therefore, the patent application as presented herein has developed a formulation making use of these other feeds with significant gains in production efficiency for the animals as fed, also reducing costs for cattle raisers.

The disclosed formulation, besides being innovative, includes the possibility of providing feed for equines, which have not been mentioned by the inventions as previously mentioned.

It also presents a sensitive and necessary adjustment to the supply of product minerals to animal diet.

### Advantages of the invention over the state of the art

The feed, concentrate and supplement formulation based on crop haystacks or culture residues, used for the nutrition of ruminants and/or equines, is fully extruded, with its composition having fiber food or crop residues and haystacks, besides presenting viable economical costs, even in comparison with related products from the nutritional market. It is very efficient from the nutritional point of view, as concluded from researches in the field. The patent application as presented improves the use of food as included in the final product by ruminants and equines, with gains in digestibility and utilization, consequently improving the efficiency of the rational use of nutritional resources with those species, with economic benefits for the exploitation activity as intended.

### Object of the invention

The object of the invention is to complement or meet nutritional requirements from ruminants and/or equines, working as food to be provided to the species intended for nutrition with animal feed, concentrate or supplement, disclosing a product with significant reduction of the final cost, due to the abundance of raw material as used, originated from annual and/or perennial crop haystacks, such as: sugar cane, grass, corn, soy, sorghum, millet, wheat, triticale, bulgur, ryegrass, oats, sugar cane bagasse and many others, as well as their crop residues.

Another object of the invention consists in improving the use of food as included in the final product, with gains in digestibility, consequently improving the efficiency of the rational use of nutritional resources with those species.

### Detailed description of the invention

The invention, defined in the claims, refers to the formulation of food classified as animal feed, concentrate and supplement, with extruded characteristics, which process involves passing the mass of ingredients as adequately mixed, be them milled or not, to the equipment known as thermoplastic food extruder. It is based on the use of products of vegetal origin, valuable products and fiber subproducts, especially crop haystacks or culture residues.

The raw material as used is originated from annual and/or perennial crop haystacks, especially from sugar cane and grass, but not excluding haystacks of corn, soy, sorghum, millet, wheat, triticale, bulgur, ryegrass, oats, sugar cane bagasse and many others, as well as their crop residues.

The formulation object of the patent application for animal feed, concentrate or supplement for ruminants or equines follows the quantitative and qualitative table as presented below, using at least one of the constituents as mentioned on said table as a source of energy, source of protein, source of nitrogen, source of fiber, source of minerals and additive(s), under the following percent quantities, by weight:

| | |
|---|---|
| **Source of Energy:** corn, sorghum, soy molasses, corn germen, protected palm fat, sugar cane molasses, corn oil and soybean oil. | **1% to 70%** |
| **Source of Protein:** soy bran, cotton bran, sugar cane yeast, soy meal and sunflower bran. | **1% to 42%** |
| **Source of Nitrogen:** urea for cattle-raising. | **0.0% to 8%** |
| **Source of minerals:** dicalcium phosphate, calcium carbonate, calcium sulfate, potassium chloride, ammonium chloride, filtered sulfur, zinc oxide, organic chromium, organic zinc, copper sulfate, magnesium | **0.2% to 20%** |
| oxide, sodium chloride, manganese monoxide, cobalt sulfate, calcium iodate, organic selenium, sodium selenite and sodium bicarbonate. | |
| **Source of fiber:** sugar cane straw (hay) and/or corn straw (hay) and/or sunflower bran and/or grass haystack (hay) and/or sugar cane bagasse. | **5% to 60%** |
| **Additive:** sodium monensin, virginiamycin, lysine, tannin from chestnut and/or ash tree. | **0.0% to 0.2%** |

The preferred modes of formulation of animal feed, respectively, for ruminants and equines, are shown below, highlighting quantities by weight, for use of at least one of the constituents as mentioned on said table as a source of energy, source of protein, source of nitrogen, source of fiber, source of minerals and additive(s), as per the table below:

| **Source of Energy:** corn, sorghum, soy molasses, corn germen, protected palm fat, sugar cane molasses, corn oil, soybean oil. | **Source of Protein:** soy bran, cotton bran, sugar cane yeast, soy meal and sunflower bran. | **Source of Nitrogen:** urea for cattle-raising | **Source of Minerals:** dicalcium phosphate, calcium carbonate, calcium sulfate, potassium chloride, ammonium chloride, filtered sulfur, zinc oxide, organic chromium, organic zinc, copper sulfate, magnesium oxide, sodium chloride, manganese monoxide, cobalt sulfate, calcium iodate, organic selenium, sodium selenite, sodium bicarbonate. | **Source of Fiber:** sugar cane straw (hay) and/or corn straw (hay) and/or sunflower bran and/or grass straw (hay) and/or sugar cane bagasse. | **Additive:** sodium monensin, virginiamycin, lysine, tannin from chestnut and/or ash tree. |
|---|---|---|---|---|---|
| **60% to 70%** | **25% to 30%** | **0% to 8%** | **3% to 5%** | **5% to 60%** | **0.1% to 0.2%** |
| **40% to 50%** | **9% to 15%** | **0%** | **1%to 2%** | **40% to 50%** | **0%** |

Two preferred embodiments of the formulation of concentrate for ruminants are shown below, highlighting the quantities by weight for the use of at least one of the constituents as mentioned by said table as a source of energy, source of protein, source of nitrogen, source of fiber, source of minerals and additive(s), as per the table below:

| **Source of Energy:** corn, sorghum, soy molasses, protected palm fat, sugar cane molasses, corn oil, soybean oil. | **Source of Protein:** soy bran, cotton bran, sugar cane yeast, powdered milk and sunflower bran. | **Source of Nitrogen: urea for** cattle-raising | **Source of** Minerals**:** dicalcium phosphate, calcium carbonate, calcium sulfate, potassium chloride, filtered sulfur, zinc oxide, organic chromium, organic zinc, copper sulfate, magnesium oxide, sodium chloride, manganese monoxide, cobalt sulfate, calcium iodate, organic selenium, sodium selenite, sodium bicarbonate. | **Source of Fiber:** sugar cane straw (hay) and/or corn straw (hay) and/or sunflower bran and/or grass straw (hay) and/or sugar cane bagasse. | **Additive:** sodium monensin, virginiamycin, lysine, tannin from chestnut and/or ash tree. |
|---|---|---|---|---|---|
| **35% to 45%** | **12% to 18%** | **3% to 5%** | **9% to 12%** | **30% to 40%** | **0.1% to 0.2%** |
| **3% to 8%** | **80% to 90%** | **2% to 4%** | **6% to 9%** | **25% to 35%** | **0.025% to 0.035%** |

Three preferred embodiments of the formulation of supplement for ruminants are shown below, highlighting the quantities by weight for the use of at least one of the constituents as mentioned in said table as the source of energy, source of protein, source of nitrogen, source of fiber and additive, as per the table below:

| **Source of Energy:** corn, sorghum, soy molasses, protected palm fat, sugar cane molasses, corn oil, soybean oil. | **Source of Protein:** soy bran, cotton bran, sugar cane yeast, powdered milk and sunflower bran. | **Source of Nitrogen:** urea for cattle-raising | **Source of** Minerals**:** dicalcium phosphate, calcium carbonate, calcium sulfate, potassium chloride, filtered sulfur, zinc oxide, organic chromium, organic zinc, copper sulfate, magnesium oxide, sodium chloride, manganese monoxide, cobalt sulfate, calcium iodate, organic selenium, sodium selenite, sodium bicarbonate. | **Source of Fiber:** sugar cane straw (hay) and/or corn straw (hay) and/or sunflower bran and/or grass straw (hay) and/or sugar cane bagasse. | **Additive:** sodium monensin, virginiamycin, lysine, tannin from chestnut and/or ash tree. |
|---|---|---|---|---|---|
| **40% to 50%** | **25% to 30%** | **4% to 8%** | **14% to 20%** | **15% to 20%** | **0.1% to 0.2%** |
| **25% to 35%** | **45% to 50%** | **0%** | **10% to 15%** | **10% to 15%** | **0.1% to 0.2%** |
| **25% to 35%** | **15% to 25%** | **4% to 8%** | **13% to 18%** | **15% to 20%** | **0.1% to 0.2%** |

It is important to highlight that, in the nutritional formulation presented as animal feed, concentrate and supplement, when formulated for equines, the source of nitrogen should always be 0.0%.

The Formulations have been shown to be more effective for ruminants when used in the following quantitative and qualitative ratios:
- at least one source of fiber, based on sugar cane haystack, corn haystack, grass haystack, sugar cane bagasse and sunflower bran, under the ratio between 5 and 60% by weight;
- source of nitrogen based on urea for cattle-raising, under the ratio between 0.01 % and 8% by weight;
- at least one source of protein based on soy bran, cotton bran, sugar cane yeast, soy meal and sunflower bran, under the ratio between 1% and 42% by weight;
- at least one source of energy: corn, sorghum, soy molasses, sugar cane molasses, corn germen, corn oil, soybean oil and protected palm fat, under the ratio between 3% and 70% by weight;
- at least one source of minerals: dicalcium phosphate, calcium carbonate, calcium sulfate, potassium chloride, ammonium chloride, filtered sulfur, zinc oxide, organic chromium, organic zinc, copper sulfate, magnesium oxide, sodium chloride, manganese monoxide, cobalt sulfate, calcium iodate, organic selenium, sodium bicarbonate and sodium selenite, under the ratio between 0.2% and 20% by weight; and
- at least one additive: sodium monensin, virginiamycin, lysine and tannin from chestnut and/or ash tree, under the ratio between 0.01% and 0.2% by weight.

The Formulations have been shown to be more effective for equines when used under the following ratios:
- at least one source of fiber, based on sugar cane haystack, corn haystack, grass haystack, sugar cane bagasse and sunflower bran, under the ratio between 10 and 50% by weight;
- at least one source of protein based on soy bran, cotton bran, sugar cane yeast, soy meal and sunflower bran, under the ratio between 1% and 42% by weight;
- at least one source of energy: corn, sorghum, soy molasses, sugar cane molasses, corn germen, corn oil, soybean oil and protected palm fat, under the ratio between 3% and 70% by weight;
- at least one source of minerals: dicalcium phosphate, calcium carbonate, calcium sulfate, potassium chloride, ammonium chloride, filtered sulfur, zinc oxide, organic chromium, organic zinc, copper sulfate, magnesium oxide, sodium chloride, manganese monoxide, cobalt sulfate, calcium iodate, organic selenium, sodium bicarbonate and sodium selenite, under the ratio between 0.2% and 20% by weight; and
- at least one additive: sodium monensin, virginiamycin, lysine and tannin from chestnut and/or ash tree, under the ratio between 0.01% and 0.2% by weight.

It is important to highlight that, for this formulation, no source of nitrogen is used.

The animal feed for ruminants and equines has shown to be fully effective for the ratios as disclosed below, highlighting that, for equines, no source of nitrogen is used:
- at least one source of fiber, based on sugar cane haystack, corn haystack, sunflower haystack, grass haystack and sugar cane bagasse, under the ratio between 5 and 60% by weight;
- source of nitrogen based on urea for cattle-raising, under the ratio between 0.01 % and 8% by weight;
- at least one source of protein based on soy bran, cotton bran, sugar cane yeast, soy meal and sunflower bran, under the ratio between 1% and 42% by weight;
- at least one source of energy: corn, sorghum, soy molasses, corn germen, sugar cane molasses, corn oil, soybean oil and protected palm fat, under the ratio between 3% and 70% by weight;
- at least one source of minerals: dicalcium phosphate, calcium carbonate, calcium sulfate, potassium chloride, ammonium chloride, filtered sulfur, zinc oxide, organic chromium, organic zinc, copper sulfate, magnesium oxide, sodium chloride, manganese monoxide, cobalt sulfate, calcium iodate, organic selenium, sodium bicarbonate and sodium selenite, under the ratio between 0.2% and 20% by weight; and
- at least one additive: sodium monensin, virginiamycin, lysine and tannin from chestnut and/or ash tree, under the ratio between 0.01% and 0.2% by weight.

The concentrate for ruminants and equines has shown to be fully effective for the ratios as disclosed below, highlighting that, for equines, no source of nitrogen is used:
- at least one source of fiber, based on sugar cane haystack, corn haystack, grass haystack, sugar cane bagasse and sunflower bran, under the ratio between 10 and 50% by weight;
- source of nitrogen based on urea for cattle-raising, under the ratio between 0.01 % and 8% by weight;
- at least one source of protein based on soy bran, cotton bran, sugar cane yeast, soy meal and sunflower bran, under the ratio between 1% and 42% by weight;
- at least one source of energy: corn, sorghum, soy molasses, corn germen, sugar cane molasses, corn oil, soybean oil and protected palm fat, under the ratio between 3% and 70% by weight;
- at least one source of minerals: dicalcium phosphate, calcium carbonate, calcium sulfate, potassium chloride, ammonium chloride, filtered sulfur, zinc oxide, organic chromium, organic zinc, copper sulfate, magnesium oxide, sodium chloride, manganese monoxide, cobalt sulfate, calcium iodate, organic selenium, sodium bicarbonate and sodium selenite, under the ratio between 0.2% and 20% by weight; and
- at least one additive: sodium monensin, virginiamycin, lysine and tannin from chestnut and/or ash tree, under the ratio between 0.01% and 0.2% by weight.

The supplement for ruminants and equines has shown to be fully effective for the ratios as disclosed below, highlighting that, for equines, no source of nitrogen is used:
- at least one source of fiber, based on sugar cane haystack, corn haystack, grass haystack, sugar cane bagasse and sunflower bran, under the ratio between 5% and 60% by weight;
- source of nitrogen based on urea for cattle-raising, under the ratio between 0.01 % and 8% by weight;
- at least one source of protein based on soy bran, cotton bran, sugar cane yeast, soy meal and sunflower bran, under the ratio between 1% and 42% by weight;
- at least one source of energy: corn, sorghum, soy molasses, sugar cane molasses, corn germen, corn oil, soybean oil and protected palm fat, under the ratio between 3% and 70% by weight;
- at least one source of minerals: dicalcium phosphate, calcium carbonate, calcium sulfate, potassium chloride, ammonium chloride, filtered sulfur, zinc oxide, organic chromium, organic zinc, copper sulfate, magnesium oxide, sodium chloride, manganese monoxide, cobalt sulfate, calcium iodate, organic selenium and sodium selenite, under the ratio between 0.2% and 20% by weight; and
- at least one additive: sodium monensin, virginiamycin, lysine and tannin from chestnut and/or ash tree, under the ratio between 0.01% and 0.2% by weight.

## Claims

1. **Nutritional formulation for ruminants, characterized by** comprising an extruded mixture of the following constituents:
- at least one source of fiber based on sugar cane haystack, corn haystack, grass haystack (hay), sugar cane bagasse and sunflower bran, under the ratio between 5% and 60% by weight;
- source of nitrogen based on urea for cattle-raising, under the ratio between 0.01 % and 8% by weight;
- at least one source of protein based on soy bran, cotton bran, sugar cane yeast, soy meal and sunflower bran, under the ratio between 1% and 42% by weight;
- at least one source of energy: corn, sorghum, soy molasses, sugar cane molasses, corn germen, corn oil, soybean oil and protected palm fat, under the ratio between 3% and 70% by weight;
- at least one source of minerals: dicalcium phosphate, calcium carbonate, calcium sulfate, potassium chloride, ammonium chloride, filtered sulfur, zinc oxide, organic chromium, organic zinc, copper sulfate, magnesium oxide, sodium chloride, manganese monoxide, cobalt sulfate, calcium iodate, organic selenium, sodium bicarbonate and sodium selenite, under the ratio between 0.2% and 20% by weight; and
- at least one additive: sodium monensin, virginiamycin, lysine and tannin from chestnut and/or ash tree, under the ratio between 0.01% and 0.2% by weight.

2. **Nutritional formulation for equines, characterized by** comprising an extruded mixture of the following constituents:
- at least one source of fiber based on sugar cane haystack, corn haystack, grass haystack (hay), sugar cane bagasse and sunflower bran, under the ratio between 10% and 50% by weight;
- at least one source of protein based on soy bran, cotton bran, sugar cane yeast, soy meal and sunflower bran, under the ratio between 1% and 42% by weight;
- at least one source of energy: corn, sorghum, soy molasses, sugar cane molasses, corn germen, corn oil, soybean oil and protected palm fat, under the ratio between 3% and 70% by weight;
- at least one source of minerals: dicalcium phosphate, calcium carbonate, calcium sulfate, potassium chloride, ammonium chloride, filtered sulfur, zinc oxide, organic chromium, organic zinc, copper sulfate, magnesium oxide, sodium chloride, manganese monoxide, cobalt sulfate, calcium iodate, organic selenium, sodium bicarbonate and sodium selenite, under the ratio between 0.2% and 20% by weight; and
- at least one additive: sodium monensin, virginiamycin, lysine and tannin from chestnut and/or ash tree, under the ratio between 0.01% and 0.2% by weight.

3. **Nutritional formulation for ruminants or equines,** of claims 1 and 2, **characterized by** comprising, as a source of fiber, at least one of the following constituents: sugar cane haystack (hay) and/or corn haystack (hay) and/or sunflower bran, grass haystack (hay) and/or sugar cane bagasse under the ratio between 5% and 60% by weight.

4. **Nutritional formulation for ruminants or equines,** of claims 1 and 2, **characterized by** the mass of ingredients being mixed, milled or not, and subsequently extruded.

5. **Animal feed for equines, characterized by** comprising an extruded mixture of the following constituents:
- at least one source of fiber based on sugar cane haystack, corn haystack, sunflower bran, grass haystack (hay) and sugar cane bagasse, under the ratio between 5% and 60% by weight;
- at least one source of protein based on soy bran, cotton bran, sugar cane yeast, soy meal and sunflower bran, under the ratio between 1% and 42% by weight;
- at least one source of energy: corn, sorghum, soy molasses, corn germen, sugar cane molasses, corn oil, soybean oil and protected palm fat, under the ratio between 3% and 70% by weight;
- at least one source of minerals: dicalcium phosphate, calcium carbonate, calcium sulfate, potassium chloride, ammonium chloride, filtered sulfur, zinc oxide, organic chromium, organic zinc, copper sulfate, magnesium oxide, sodium chloride, manganese monoxide, cobalt sulfate, calcium iodate, organic selenium, sodium bicarbonate and sodium selenite, under the ratio between 0.2% and 20% by weight; and
- at least one additive: sodium monensin, virginiamycin, lysine and tannin from chestnut and/or ash tree, under the ratio between 0.01% and 0.2% by weight.

6. **Nutritional formulation for equines,** of claims 1, **characterized by** comprising an extruded mixture of the following constituents:
- at least one source of fiber based on sugar cane haystack, corn haystack, grass haystack (hay), sugar cane bagasse and sunflower bran, under the ratio between 10% and 50% by weight.

## Patentansprüche

1. **Ernährungsformulierung für Wiederkäuer, dadurch gekennzeichnet, dass** sie eine extrudierte Mischung der folgenden Bestandteile umfasst:
- mindestens eine Faserquelle auf Basis von Zuckerrohrheuhaufen, Maisheuhaufen, Grasheuhaufen (Heu), Zuckerrohrbagasse und Sonnenblumenkleie, im Verhältnis zwischen 5 Gew.-% und 60 Gew.-%;
- Stickstoffquelle auf Harnstoffbasis für die Viehzucht, im Verhältnis zwischen 0,01 Gew.-% und 8 Gew.-%;
- mindestens eine Proteinquelle auf der Basis von Sojakleie, Baumwollkleie, Zuckerrohrhefe, Sojamehl und Sonnenblumenkleie, im Verhältnis zwischen 1 Gew.-% und 42 Gew.-%;
- mindestens eine Energiequelle: Mais, Sorghum, Sojamelasse, Zuckerrohrmelasse, Maiskeime, Maisöl, Sojaöl und geschütztes Palmfett, im Verhältnis zwischen 3 Gew.-% und 70 Gew.-%;
- mindestens eine Mineralquelle: Dicalciumphosphat, Calciumkarbonat, Calciumsulfat, Kaliumchlorid, Ammoniumchlorid, gefilterter Schwefel, Zinkoxid, organisches Chrom, organisches Zink, Kupfersulfat, Magnesiumoxid, Natriumchlorid, Manganmonoxid, Kobaltsulfat, Calciumiodat, organisches Selen, Natriumbicarbonat und Natriumselenit, im Verhältnis zwischen 0,2 Gew.-% und 20 Gew.-%; und
- mindestens ein Zusatzstoff: Natriummonensin, Virginiamycin, Lysin und Tannin aus Kastanien und/oder Eschen, im Verhältnis zwischen 0,01 Gew.-% und 0,2 Gew.-%.

2. **Ernährungsformulierung für Pferde, dadurch gekennzeichnet, dass** sie eine extrudierte Mischung der folgenden Bestandteile umfasst:
- mindestens eine Faserquelle auf Basis von Zuckerrohrheuhaufen, Maisheuhaufen, Grasheuhaufen (Heu), Zuckerrohrbagasse und Sonnenblumenkleie, im Verhältnis zwischen 10 Gew.-% und 50 Gew.-%;
- mindestens eine Proteinquelle auf der Basis von Sojakleie, Baumwollkleie, Zuckerrohrhefe, Sojamehl und Sonnenblumenkleie, im Verhältnis zwischen 1 Gew.-% und 42 Gew.-%;
- mindestens eine Energiequelle: Mais, Sorghum, Sojamelasse, Zuckerrohrmelasse, Maiskeime, Maisöl, Sojaöl und geschütztes Palmfett, im Verhältnis zwischen 3 Gew.-% und 70 Gew.-%;
- mindestens eine Mineralquelle: Dicalciumphosphat, Calciumkarbonat, Calciumsulfat, Kaliumchlorid, Ammoniumchlorid, gefilterter Schwefel, Zinkoxid, organisches Chrom, organisches Zink, Kupfersulfat, Magnesiumoxid, Natriumchlorid, Manganmonoxid, Kobaltsulfat, Calciumiodat, organisches Selen, Natriumbicarbonat und Natriumselenit, im Verhältnis zwischen 0,2 Gew.-% und 20 Gew.-%; und
- mindestens ein Zusatzstoff: Natriummonensin, Virginiamycin, Lysin und Tannin aus Kastanien und/oder Eschen, im Verhältnis zwischen 0,01 Gew.-% und 0,2 Gew.-%.

3. **Ernährungsformulierung für Widerkäuer oder Pferde,** nach Anspruch 1 und 2, **dadurch gekennzeichnet, dass** sie als Faserquelle mindestens einen der folgenden Bestandteile umfasst: Zuckerrohrheuhaufen (Heu) und/oder Maisheuhaufen (Heu) und/oder Sonneblumenkleie, Gras Heuhaufen (Heu) und/oder Zuckerrohrbagasse im Verhältnis zwischen 5 Gew.-% und 60 Gew.-%.

4. **Ernährungsformulierung für Widerkäuer oder Pferde,** nach Anspruch 1 und 2, **dadurch gekennzeichnet, dass** die Masse von Inhaltsstoffen gemischt, gemahlen oder nicht und anschließend extrudiert wird.

5. **Tierfutter für Pferde, dadurch gekennzeichnet, dass** sie eine extrudierte Mischung der folgenden Bestandteile umfasst:
- mindestens eine Faserquelle auf Basis von Zuckerrohrheuhaufen, Maisheuhaufen, Sonnenblumenkleie, Grasheuhaufen (Heu) und Zuckerrohrbagasse, im Verhältnis zwischen 5 Gew.-% und 60 Gew.-%;
- mindestens eine Proteinquelle auf der Basis von Sojakleie, Baumwollkleie, Zuckerrohrhefe, Sojamehl und Sonnenblumenkleie, im Verhältnis zwischen 1 Gew.-% und 42 Gew.-%;
- mindestens eine Energiequelle: Mais, Sorghum, Sojamelasse, Maiskeime, Zuckerrohrmelasse, Maisöl, Sojaöl und geschütztes Palmfett, im Verhältnis zwischen 3 Gew.-% und 70 Gew.-%;
- mindestens eine Mineralquelle: Dicalciumphosphat, Calciumkarbonat, Calciumsulfat, Kaliumchlorid, Ammoniumchlorid, gefilterter Schwefel, Zinkoxid, organisches Chrom, organisches Zink, Kupfersulfat, Magnesiumoxid, Natriumchlorid, Manganmonoxid, Kobaltsulfat, Calciumiodat, organisches Selen, Natriumbicarbonat und Natriumselenit, im Verhältnis zwischen 0,2 Gew.-% und 20 Gew.-%; und
- mindestens ein Zusatzstoff: Natriummonensin, Virginiamycin, Lysin und Tannin aus Kastanien und/oder Eschen, im Verhältnis zwischen 0,01 Gew.-% und 0,2 Gew.-%.

6. **Ernährungsformulierung für Pferde,** nach Anspruch 1, **dadurch gekennzeichnet, dass** sie eine extrudierte Mischung der folgenden Bestandteile umfasst:
- mindestens eine Faserquelle auf Basis von Zuckerrohrheuhaufen, Maisheuhaufen, Grasheuhaufen (Heu), Zuckerrohrbagasse und Sonnenblumenkleie, im Verhältnis zwischen 10 Gew.-% und 50 Gew.-%.

## Revendications

1. **Formulation nutritionnelle pour ruminants, caractérisée en ce qu'**elle comprend un mélange extrudé des constituants suivants :
- au moins une source de fibres à base de meule de foin de canne à sucre, de meule de foin de maïs, de meule de foin d'herbe (foin), de bagasse de canne à sucre et de son de tournesol, dans le rapport entre 5 % et 60 % en poids ;
- source d'azote à base d'urée pour l'élevage bovin, dans le rapport entre 0,01 % et 8 % en poids ;
- au moins une source de protéines à base de son de soja, de son de coton, de levure de canne à sucre, de farine de soja et de son de tournesol, dans le rapport entre 1 % et 42 % en poids ;
- au moins une source d'énergie : maïs, sorgho, mélasse de soja, mélasse de canne à sucre, germen de maïs, huile de maïs, huile de soja et graisse de palme protégée, dans le rapport entre 3 % et 70 % en poids ;
- au moins une source de minéraux : phosphate dicalcique, carbonate de calcium, sulfate de calcium, chlorure de potassium, chlorure d'ammonium, soufre filtré, oxyde de zinc, chrome organique, zinc organique, sulfate de cuivre, oxyde de magnésium, chlorure de sodium, monoxyde de manganèse, sulfate de cobalt, iodate de calcium, sélénium organique, bicarbonate de sodium et sélénite de sodium, dans le rapport entre 0,2 % et 20 % en poids ; et
- au moins un additif : monensine sodium, virginiamycine, lysine et tanin de châtaignier et/ou de frêne, dans le rapport entre 0,01 % et 0,2 % en poids.

2. **Formulation nutritionnelle pour équidés, caractérisée en ce qu'**elle comprend un mélange extrudé des constituants suivants :
- au moins une source de fibres à base de meule de foin de canne à sucre, de meule de foin de maïs, de meule de foin d'herbe (foin), de bagasse de canne à sucre et de son de tournesol, dans le rapport entre 10 % et 50 % en poids ;
- au moins une source de protéines à base de son de soja, de son de coton, de levure de canne à sucre, de farine de soja et de son de tournesol, dans le rapport entre 1 % et 42 % en poids ;
- au moins une source d'énergie : maïs, sorgho, mélasse de soja, mélasse de canne à sucre, germen de maïs, huile de maïs, huile de soja et graisse de palme protégée, dans le rapport entre 3 % et 70 % en poids ;
- au moins une source de minéraux : phosphate dicalcique, carbonate de calcium, sulfate de calcium, chlorure de potassium, chlorure d'ammonium, soufre filtré, oxyde de zinc, chrome organique, zinc organique, sulfate de cuivre, oxyde de magnésium, chlorure de sodium, monoxyde de manganèse, sulfate de cobalt, iodate de calcium, sélénium organique, bicarbonate de sodium et sélénite de sodium, dans le rapport entre 0,2 % et 20 % en poids ; et
- au moins un additif : monensine sodium, virginiamycine, lysine et tanin de châtaignier et/ou de frêne, dans le rapport entre 0,01 % et 0,2 % en poids.

3. **Formulation nutritionnelle pour ruminants ou équidés,** selon les revendications 1 et 2, **caractérisée en ce qu'**elle comprend, comme source de fibres, au moins l'un des constituants suivants : meule de foin de canne à sucre (foin) et/ou meule de foin de maïs (foin) et/ou son de tournesol, meule de foin d'herbe (foin) et/ou bagasse de canne à sucre dans un rapport entre 5 % et 60 % en poids.

4. **Formulation nutritionnelle pour ruminants ou équidés,** selon les revendications 1 et 2, **caractérisée par** la masse d'ingrédients étant mélangés, broyés ou non, puis extrudés.

5. **Alimentation animale pour équidés, caractérisée en ce qu'**elle comprend un mélange extrudé des constituants suivants :
- au moins une source de fibres à base de meule de foin de canne à sucre, de meule de foin de maïs, de son de tournesol, de meule de foin d'herbe (foin) et de bagasse de canne à sucre, dans le rapport entre 5 % et 60 % en poids ;
- au moins une source de protéines à base de son de soja, de son de coton, de levure de canne à sucre, de farine de soja et de son de tournesol, dans le rapport entre 1 % et 42 % en poids ;
- au moins une source d'énergie : maïs, sorgho, mélasse de soja, germen de maïs, mélasse de canne à sucre, huile de maïs, huile de soja et graisse de palme protégée, dans le rapport entre 3 % et 70 % en poids ;
- au moins une source de minéraux : phosphate dicalcique, carbonate de calcium, sulfate de calcium, chlorure de potassium, chlorure d'ammonium, soufre filtré, oxyde de zinc, chrome organique, zinc organique, sulfate de cuivre, oxyde de magnésium, chlorure de sodium, monoxyde de manganèse, sulfate de cobalt, iodate de calcium, sélénium organique, bicarbonate de sodium et sélénite de sodium, dans le rapport entre 0,2 % et 20 % en poids ; et
- au moins un additif : monensine sodium, virginiamycine, lysine et tanin de châtaignier et/ou de frêne, dans le rapport entre 0,01 % et 0,2 % en poids.

6. **Formulation nutritionnelle pour équidés,** selon les revendications 1, **caractérisée en ce qu'**elle comprend un mélange extrudé des constituants suivants :
- au moins une source de fibres à base de meule de foin de canne à sucre, de meule de foin de maïs, de meule de foin d'herbe (foin), de bagasse de canne à sucre et de son de tournesol, dans le rapport entre 10 % et 50 % en poids.
